# EUROPEAN PATENT SPECIFICATION

(11) **EP 1 580 741 B1**
(45) Date of publication and mention of the grant of the patent: **12.12.2007**
(21) Application number: 05251761.2
(22) Date of filing: 22.03.2005
(51) Int. Cl.: G11B 7/26

(54) **Recording medium producting method, recording medium producting apparatus and recording medium**
Fertigungsverfahren für ein Aufzeichnungsmedium, Fertigungsvorrichtung für ein Aufzeichnungsmedium und Aufzeichnungsmedium
Procédé de production de support d'enregistrement, appareil de production de support d'enregistrement et support d'enregistrement

(30) Priority: 22.03.2004 JP 2004082632; 18.06.2004 JP 2004180784
(43) Date of publication of application: 28.09.2005
(73) Proprietor: Ricoh Company, Ltd., Tokyo 143-8555 (JP)
(72) Inventor: Koga, Noboru, Machida-shi Tokyo (JP)
(74) Representative: Mounteney, Simon James

(56) References cited:
- DE-A1- 10 113 833
- US-A- 4 877 475
- PATENT ABSTRACTS OF JAPAN vol. 011, no. 342 (P-635), 10 November 1987 (1987-11-10) -& JP 62 124629 A (MATSUSHITA ELECTRIC IND CO LTD), 5 June 1987 (1987-06-05)

## Description

### BACKGROUND OF THE INVENTION

### 1. Field of the Invention

The present invention generally relates to recording medium producing methods and recording medium producing apparatuses for producing information recording media such as optical disks by bonding a plurality of disk substrates having center holes and recording media, and more particularly to a recording medium producing method in which a plurality of disk substrates are centered and bonded, a recording medium producing apparatus which employs such a recording medium producing method, and a recording medium produced by such a recording medium producing method or apparatus.

### 2. Description of the Related Art

Information is read from, written on or erased from optical disks using a laser beam. The optical disks are produced by bonding two light transmitting substrates. Such optical disks include the so-called DVDs and laser disks.

The optical disk is made up of a pair of light transmitting substrates, a reflecting layer, a bonding layer and a recording layer. A polycarbonate (PC) resin or a PMMA resin (common name: acrylic resin) is used for the light transmitting substrate. An alloy of Au, Ag, Al or the like is used for the reflecting layer. In addition, an ultraviolet curing bonding glue is used for the bonding layer.

Conventionally, the radical ultraviolet (UV) method is most popularly employed as the optical disk bonding method. According to the radical UV method, an optical disk information substrate which includes the recording layer and the reflection layer and on which the information is recorded, and a cover substrate which forms a cover, are bonded in the following manner. That is, a radical UV bonding glue is supplied by a dispenser onto a predetermined concentric position on the optical disk information substrate, and after placing the cover substrate on the optical disk information substrate, the two substrates are rotated at a predetermined rotational speed for a predetermined time to eliminate the excess radical UV bonding glue. Then, an ultraviolet ray is irradiated on the two substrates to cure the radical UV bonding glue, so as to bond the two substrates into a laminated substrate that forms the optical disk.

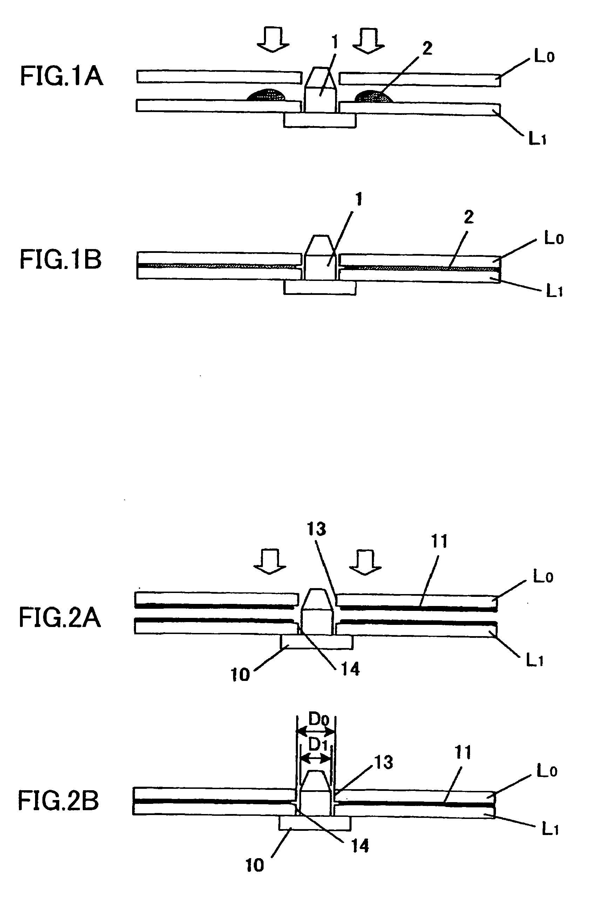

FIGS. 1A and 1B are cross sectional views for explaining a conventional method of bonding a 2-layer optical disk. It is assumed for the sake of convenience that the 2-layer optical disk is made up of an upper substrate L0 and a lower substrate L1, and that a light incident surface faces up, that is, the light is irradiated from one side closer to the upper substrate L0. A center pin 1 is inserted through center holes of the substrates L1 and L0. In FIG. 1A, arrows indicate the direction in which the substrates L1 and L0 are fitted over the center pin 1. An ultraviolet (UV) curing bonding glue 2 is provided between the substrates L0 and L1.

When carrying out a bonding process, the UV curing bonding glue 2 between the substrates L0 and L1 is normally cured by irradiating an ultraviolet (UV) ray from above, and thus, the substrates L0 and L1 are transported in a state where the substrate L0 which is capable of transmitting the light to the UV curing bonding glue 2 is facing up. More particularly, the substrate L1 is placed on a stage under decompression suction with a sputtered barrier layer (light incident surface) thereof facing up. The UV curing bonding glue 2 having a viscosity of 500 cp is supplied by a dispenser while the stage is rotated at a rotational speed of approximately several tens of revolutions per minute (rpm), so that the UV curing bonding glue 2 is supplied in a concentric manner at a position approximately 30 mm from the center of the substrate L1. In this state, the substrate L0 having a light incident surface thereof facing up is placed on the substrate L1 via the UV curing bonding glue 2, as shown in FIG. 1A.

Thereafter, the stage is rotated at several hundred to several thousand rpm, so as to spin-coat and spread the UV curing bonding glue 2 towards the outer periphery of the substrates L0 and L1. The two substrates L0 and L1 are then moved to a light irradiating stage (or fixing stage). The fixing stage has decompression suction holes at portions corresponding to inner clamping surfaces of the substrates L0 and L1, and holds the inner clamping surfaces of the substrates L0 and L1 under decompression suction of 50 kPa to 90 kPa. The UV ray is irradiated on the UV curing bonding glue 2 via the substrate L0, so as to cure the UV curing bonding glue 2 and bond the substrates L0 and L1 together into a laminated substrate that forms the optical disk.

In the optical disk that is formed in this manner, such as a DVD, and particularly the 2-layer reproducing disk or the 2-layer recording disk, it becomes impossible to read the signals or record the signals if an error between centers of grooves of the two substrates L0 and L1 is not less than a predetermined value. For this reason, it is important that the centers of the grooves of the two substrates L0 and L1 match.

If the centering is made by matching the center of the center hole in the substrate and the groove center when mounting a stamper to a mold, the groove eccentricity relative to the center hole of each of the substrates L0 and L1 remains virtually unchanged from this state if formed using this mold, and the substrates L0 and L1 can be produced stably. However, depending on how the two substrates L0 and L1 are laminated, a large error is generated between the center holes of the two substrates L0 and L1, and the groove eccentricity becomes inconsistent among the substrates. Normally, the optical disk is set to a drive or player using the center hole in the substrate L1, and thus, the groove eccentricity of the substrate L0 with respect to the center hole of the substrate L1 becomes large depending on how the two substrates L0 and L1 are laminated.

A Japanese Laid-Open Patent Application No.10-97740 proposes enlarging a diameter of a solid block center pin that is divided into three parts, towards the outer peripheral direction, so as to push the inner peripheral edges defining the center holes of the two laminating disks (substrates L0 and L1) outwards and match the center holes when irradiating the UV ray to laminate the two laminating disks.

However, according to the Japanese Laid-Open Patent Application No.10-97740, if the diameters of the center holes of the two laminating disks differ by several tens of µm, only the inner peripheral edge defining the smaller center hole is pushed outwards by the solid block center pin, and no force is applied on the inner peripheral edge defining the larger center hole. In other words, the pushing force is only applied to one of the two laminating disks, and the groove eccentricity becomes large due to the different diameters of the center holes. In addition, since the three parts of the solid block center pin are operated mechanically, the precision of the movement on the order of several µm to several tens of µm may deteriorate if one of the three parts does not move smoothly or is set in fatigue.

A Japanese Laid-Open Patent Application No.2001-189039 proposes enlarging a diameter of a solid block center pin that is divided into three parts, towards the outer peripheral direction by centrifugal force of a weight disposed within a table, so as to push the inner peripheral edges defining the center holes of the two laminating disks (substrates L0 and L1) outwards and match the center holes when spin-coating the bonding glue on the two laminating disks.

However, according to the Japanese Laid-Open Patent Application No.2001-189039, if the diameters of the center holes of the two laminating disks differ by several tens of µm, only the inner peripheral edge defining the smaller center hole is pushed outwards by the solid block center pin, and no force is applied on the inner peripheral edge defining the larger center hole. In other words, the pushing force is only applied to one of the two laminating disks, and the groove eccentricity becomes large due to the different diameters of the center holes. In addition, since the three parts of the solid block center pin are operated by the centrifugal force of the weight, the precision of the movement on the order of several µm to several tens of µm may deteriorate if one of the three parts does not move smoothly or is set in fatigue. Furthermore, the internal structure of the table becomes complex because of the need to provide the weight.

A Japanese Laid-Open Patent Application No.2002-32946 proposes enlarging a diameter of a solid block center pin that is divided into three rigid parts, towards the outer peripheral direction by driving the three rigid parts by a motor, so as to push the inner peripheral edges defining the center holes of the two laminating disks (substrates L0 and L1) outwards and match the center holes.

However, according to the Japanese Laid-Open Patent Application No.2002-32946, if the diameters of the center holes of the two laminating disks differ by several tens of µm, only the inner peripheral edge defining the smaller center hole is pushed outwards by the solid block center pin, and no force is applied on the inner peripheral edge defining the larger center hole. In other words, the pushing force is only applied to one of the two laminating disks, and the groove eccentricity becomes large due to the different diameters of the center holes. In addition, since the three parts of the solid block center pin are operated mechanically, the precision of the movement on the order of several µm to several tens of µm may deteriorate if one of the three parts does not move smoothly or is set in fatigue. Moreover, the structure of the motor or table becomes complex, thereby making the recording medium producing apparatus expensive.

The Japanese Laid-Open Patent Application No.10-92025 proposes pushing the inner peripheral edges defining the center holes of the two laminating disks (substrates L0 and L1) outwards at three or more points so as to match the center holes.

However, according to the Japanese Laid-Open Patent Application No.10-92025, the eccentricity between the two laminating disks becomes a sum of "the eccentricity between a pushing pin and the laminating disk L0" and "the eccentricity between the pushing pin and the laminating disk L1". Hence, it may be regarded that the centering precision is poorer compared to the case where the two laminating disks are pushed with the same pressure in the same plane. In addition, in order to improve the centering precision or to avoid pushing the inner peripheral edge of the center hole of only one of the laminated disks, it becomes necessary to produce the pin part with a high precision, which in turn makes the recording medium producing apparatus expensive. Furthermore, the reproducibility of the pin return when the bonding glue once cures and the reproducibility of the pin push-out may be difficult to maintain.

A Japanese Laid-Open Patent Application No.2002-42386 proposes pushing the inner peripheral edges defining the center holes of the two laminating disks (substrates L0 and L1) outwards by a solid spindle bar so as to match the center holes, by providing a tube or ball which expands to enlarge the diameter of the spindle bar.

However, according to the Japanese Laid-Open Patent Application No.2002-42386, if the diameters of the center holes of the two laminating disks differ by several tens of µm, only the inner peripheral edge defining the smaller center hole is pushed outwards by the solid block center pin, and no force is applied on the inner peripheral edge defining the larger center hole. In other words, the pushing force is only applied to one of the two laminating disks, and the groove eccentricity becomes large due to the different diameters of the center holes. In addition, the diameter increase of the spindle bar may be different at the top and bottom, which would make the centering effect different at the top and bottom. Moreover, the structure of the recording medium producing apparatus becomes complex when the centering is to be made while laminating the two laminating disks, thereby making the recording medium producing apparatus expensive.

A Japanese Laid-Open Patent Application No.2003-91887 proposes the use of a rubber chuck type center pin that can resiliently deform at least in the radial direction and cover the center hole of the disk. First, only the laminating disk L1 is placed by inserting the center pin into the center hole of the laminating disk L1 and the rubber chuck type center pin is then expanded. Thereafter, the expanded rubber chuck type center pin is used as an inner peripheral guard, and the bonding glue is coated on the inner peripheral part of the laminating disk L1 in the vicinity of the rubber chuck type center pin. The laminating disk L0 is placed on top of the laminating disk L1 and bonded to the laminating disk L1.

However, the object of the Japanese Laid-Open Patent Application No.2003-91887 is to spin-coat and spread the bonding glue towards the outer periphery of the laminating disk without mixing air within the layer of the bonding glue, and a high-precision centering of the laminating disks cannot be expected for the following reasons. That is, in order to carry out the centering, the rubber chuck type center pin must exert a certain pushing force. But as the pushing force increases and the centering effect stabilizes, it becomes more difficult to place the laminating disk L0 on top of the laminating disk L1 since the expanded rubber chuck type center pin may be larger than the center hole of the laminating disk L0. If the laminating disk L0 is forcibly placed on top of the laminating disk L1 by deforming the expanded rubber chuck type center pin by the inner peripheral edge of the center hole of the laminating disk L0, the centering effect and the acceleration of the laminating disk L0 in the axial direction deteriorate considerably. The acceleration of the laminating disk L0 in the axial direction, or simply axial acceleration, refers to the acceleration of the deviation of the laminating disk L0. But if the expanded rubber chuck type center pin is contracted so as to permit easy insertion of the laminated disk L0, the centering effect with respect to the laminated disk L0 in this state is poor, and the bonding glue in the vicinity of the rubber chuck type center pin may enter within the center holes of the laminating disks L1 and L0. Therefore, this proposed method is not established as a centering method.

### SUMMARY OF THE INVENTION

Accordingly, it is a general object of the present invention to provide a recording medium producing method, recording medium producing apparatus, in which the problems described above are suppressed.

Another and more specific object of the present invention is to provide a recording medium producing method and a recording medium producing apparatus which can laminate a plurality of disk substrates without eccentricity between center holes of the disk substrates, by use of a simple apparatus structure, even if diameters of the center holes of the disk substrates differ by several tens of µm, when laminating the disk substrates by irradiating light thereon to cure a bonding glue, for example, and to a recording medium produced by such a recording medium producing method or apparatus.

JP-A-62124629 and DE-A-10113833 each disclose a recording medium producing method for producing an information recording medium by bonding a plurality of disk substrates having centre holes, comprising, a bonding process in which the plurality of disk substrates are centered and bonded, said bonding process including a real centering to insert a resiliently deformable centre pin into the centre holes of the plurality of disk substrates, and to expand the centre pin from a contracted state to an expanded state so that the centre pin in the expanded state pushes against inner peripheral parts of the plurality of disk substrates defining the centre holes.

The invention (cf. claim 1) is characterized in that the bonding process further includes, a coating and laminating to spin-coat a layer of an adhesive agent on a surface of each of the plurality of disk substrates, and to laminate the plurality of disk substrates, prior to the real centering; a moving to move the centre pin in the expanded state to a position under an ultraviolet lamp after the real centering and then contracting the centre pin to the contracted state; and an exposing to expose the plurality of disk substrates to an ultraviolet ray from the ultraviolet lamp after a predetermined time from the contracting of the centre pin, so as to cure the adhesive agent.

According to the recording medium producing method of the present invention, it is possible to laminate a plurality of disk substrates without eccentricity between center holes of the disk substrates, by use of a simple apparatus structure, even if diameters of the center holes of the disk substrates differ by several tens of µm, when laminating the disk substrates by irradiating light thereon to cure a bonding glue, for example.

The invention also provides an apparatus as claimed in claim 13. According to the recording medium producing apparatus of the present invention, it is possible to laminate a plurality of disk substrates without eccentricity between center holes of the disk substrates, by use of a simple apparatus structure, even if diameters of the center holes of the disk substrates differ by several tens of µm, when laminating the disk substrates by irradiating light thereon to cure a bonding glue, for example.

Other objects and further features of the present invention will be apparent from the following detailed description when read in conjunction with the accompanying drawings.

### BRIEF DESCRIPTION OF THE DRAWINGS

FIGS. 1A and 1B are cross sectional views for explaining a conventional method of bonding a 2-layer optical disk;
FIGS. 2A and 2B are cross sectional views for explaining a provisional centering in a bonding process of an embodiment of a recording medium producing method according to the present invention;
FIGS. 3A and 3B are cross sectional views for explaining a real centering in the bonding process of the embodiment of the recording medium producing method;
FIG. 4 is a cross sectional view for explaining a holding state by a center pin when inner diameters of center holes of disk substrates differ;
FIG. 5 is a cross sectional view for explaining a UV protection structure with respect to the center pin;
FIG. 6 is a cross sectional view for explaining another UV protection structure with respect to the center pin;
FIG. 7 is a cross sectional view for explaining control of warping of outer peripheral parts of the disk substrates;
FIG. 8 is a diagram showing a relationship between a pin expansion pressure and a radial tilt;
FIG. 9 is a diagram showing a relationship between the pin expansion pressure and a warp;
FIG. 10 is a diagram showing a relationship between the pin expansion pressure and a tangential tilt; and
FIG. 11 is a diagram showing a relationship between the pin expansion pressure and an acceleration in an axial direction.

### DESCRIPTION OF THE PREFERRED EMBODIMENTS

A description will be given of embodiments of a recording medium producing method according to the present invention, a recording medium producing apparatus according to the present invention, and a recording medium according to the present invention, by referring to FIG. 2A and the subsequent drawings.

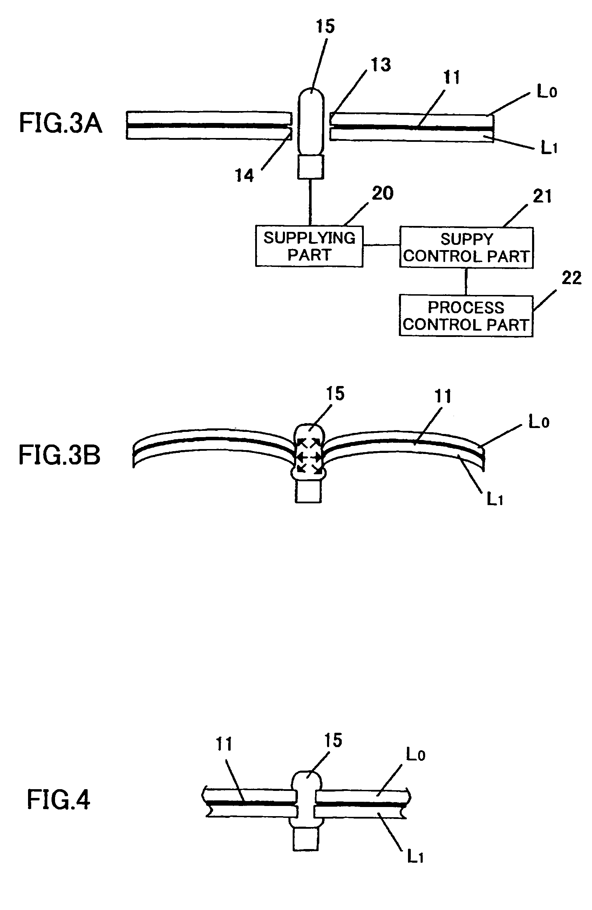

FIGS. 2A and 2B are cross sectional views for explaining a provisional centering in a bonding process of an embodiment of the recording medium producing method according to the present invention, and FIGS. 3A and 3B are cross sectional views for explaining a real centering in the bonding process of the embodiment of the recording medium producing method. In this embodiment of the recording medium producing method, a recording medium (recording disk) is produced from two disk substrates L0 and L1. This embodiment of the recording medium producing method employs an embodiment of the recording medium producing apparatus according to the present invention.

First, prior to laminating the disk substrates L0 and L1, a bonding glue (or adhesive agent) 11 is independently spin-coated on the disk substrates L0 and L1 to a predetermined thickness. For example, the bonding glue 11 may be supplied to the surface of each of the disk substrates L0 and L1 from a dispenser, in a ring shape, and spin-coated in a known manner. By independently spin-coating the bonding glue 11 on the disk substrates L0 and L1, it is possible to stabilize the thickness of the bonding glue 11, and to suppress the spreading of the bonding glue 11 towards the inner periphery of the disk substrates L0 and L1. Furthermore, it is possible to effectively prevent the bonding glue 11 from adhering to a center holding member 10 which holds the disk substrates L0 and L1 by center holes 13 and 14 thereof.

Thereafter, as shown in FIG. 2A, the disk substrates L0 and L1 are arranged so that the layers of the spin-coated bonding glue 11 confront each other and a center boss forming the center holding member 10 is inserted into the center holes 13 and 14 of the disk substrates L0 and L1. The disk substrates L0 and L1 are then laminated or stacked in vacuum, as shown in FIG. 2B. Hence, the disk substrates L0 and L1 can be bonded without introducing air bubbles in the layers of the spin-coated bonding glue 11.

The laminated disk substrates L0 and L1 may be rotated in this state to remove the excess bonding glue 11 between the laminated disk substrates L0 and L1 prior to a provisional centering.

The center holding member 10, such as the center boss, transport boss, spin-coating table boss and vacuum laminating table, carries out the provisional centering with respect to at least two disk substrates L0 and L1 during and after the process of laminating the at least two disk substrates L0 and L1. The provisional centering is made by the center holding member 10 having a holding pin diameter D1 which is 0.015 mm to 0.05 mm smaller than a diameter D0 of the smallest one of the center holes of the plurality of disk substrates to be provisionally centered, that is, the smaller one of the center holes 13 and 14 of the at least two disk substrates L0 and L1 in this particular case. This provisional centering improves the stability of the real centering during the next process, and also contributes to the stabilization of the layer thickness of the bonding glue 11.

The laminated disk substrates L0 and L1 are transported and subjected to the real centering in the next process. In this embodiment, a resiliently deformable center pin 15 which can expand (or be inflated) from a contracted (or deflated) state shown in FIG. 3A to an expanded (or inflated) state shown in FIG. 3B is used. In FIG. 2A, arrows indicate the direction in which the substrates L1 and L0 are fitted over the center pin 15. The center pin 15 is expanded to the expanded state by introducing a gas or liquid within the center pin 15. After the center pin 15 is inserted into the center holes 14 and 13 of the laminated disk substrates L1 and L0, the center pin 15 is expanded to the expanded state to press against the inner peripheral edges defining the center holes 14 and 13 of the disk substrates L1 and L0.

In FIG. 3A, a supplying part or means 20 supplies the gas or liquid to the center pin 15. A supply control part or means 21 controls the supply of the gas or liquid from the supplying part or means 20. A process control part or means 22 controls the production process including the supply control part or means 21.

In this embodiment, the center pin 15 is made of a resiliently deformable material such as a rubber material and is resiliently deformed to expand or contract by supplying air to the center pin 15.

In the real centering of this embodiment, the center pin 15 is inserted into the center holes 14 and 13 of the laminated disk substrates L1 and L0. But when the laminated disk substrates L1 and L0 are loaded with respect to the center pin 15, the pressure required for the centering is not yet applied to the center pin 15 and the center pin 15 is in the contracted state as shown in FIG. 3A. Hence, the laminated disk substrates L1 and L0 can be loaded with respect to the center pin 15 without rubbing the center pin 15 by the inner peripheral edges defining the center holes 14 and 13 of the disk substrates L1 and L0 or, in a state where a frictional force between the inner peripheral edges defining the center holes 14 and 13 and the center pin 15 is minimized. Thereafter, the air is supplied to the center pin 15 so as to apply a predetermined pressure required for the centering and expand the center pin 15, as shown in FIG. 3B, and the centering is carried out with respect to the laminated disk substrates L1 and L0.

In other words, if the laminated disk substrates L1 and L0 were forcibly loaded with respect to the center pin 15 in the state where the predetermined pressure required for the centering is applied and the center pin 15 is expanded, the centering effect and the acceleration of the laminated disk substrates L1 and L0 in the axial direction would deteriorate considerably. This embodiment avoids such deterioration in the centering effect and the acceleration of the laminated disk substrates L1 and L0 in the axial direction.

The center pin 15 has a hollow structure and is approximately cylindrical in shape. The cross section of the center pin 15 taken along a plane perpendicular to an axial direction thereof is a true circle in the contracted state, and maintains a larger true circle in the expanded state. The resiliently deformable material used for the center pin 15 enables the center pin 15 to have a diameter which is at least 0.2 mm greater in the expanded state than the diameter of the largest one of the center holes in the plurality of disk substrates to be centered, that is, the larger one of the center holes 14 and 13 of the laminated disk substrates L1 and L0 in this particular case. Hence, in the expanded state, the center pin 15 can push the inner peripheral parts of the laminated disk substrates L1 and L0 at the center holes 14 and 13 towards the outer peripheral direction with a uniform pressure for the entire 360 degree angular range.

In addition, when the center pin 15 pushes against the inner peripheral parts of the laminated disk substrates L1 and L0 at the center holes 14 and 13 towards the outer peripheral direction, so as to hold the laminated disk substrates L1 and L0 having the center holes 14 and 13 with mutually different diameters (that is, to hold a plurality of disk substrates having center holes with mutually different diameters), the center pin 15 expands and the diameter thereof increases to conform to the inner peripheral parts of the laminated disk substrates L1 and L0 at the center holes 14 and 13, as shown in FIG. 4. FIG. 4 is a cross sectional view for explaining a holding state by the center pin 15 when the inner diameters of center holes 14 and 13 of the disk substrates L1 and L0 differ. The resiliently deformable material used for the center pin 15 has a suitable hardness and thickness so that the center pin 15 is sufficiently compliant and can resiliently deform to stably hold the laminated disk substrates L1 and L0 at the center holes 14 and 13.

In this embodiment, the air is supplied to the center pin 15 at a pressure of 2 kg/cm² to 4.5 kg/cm² so that the center pin 15 is sufficiently expanded to obtain a sufficient centering effect, as shown in FIG. 3B.

When the groove eccentricity of the disk substrate L0 having the center hole 13 with respect to the disk substrate L1 was measured using the disk substrate L1 having a groove eccentricity with respect to the center hole 14 thereof suppressed to 10 µm or less, the measured groove eccentricity was found to be 10 µm to 15 µm. The measured groove eccentricity was extremely satisfactory compared to the conventional case where the centering is made under similar conditions by use of a rigid center pin having a diameter that is 20 µm smaller than the diameter of the center hole in the disk substrate and the measured groove eccentricity was 50 µm.

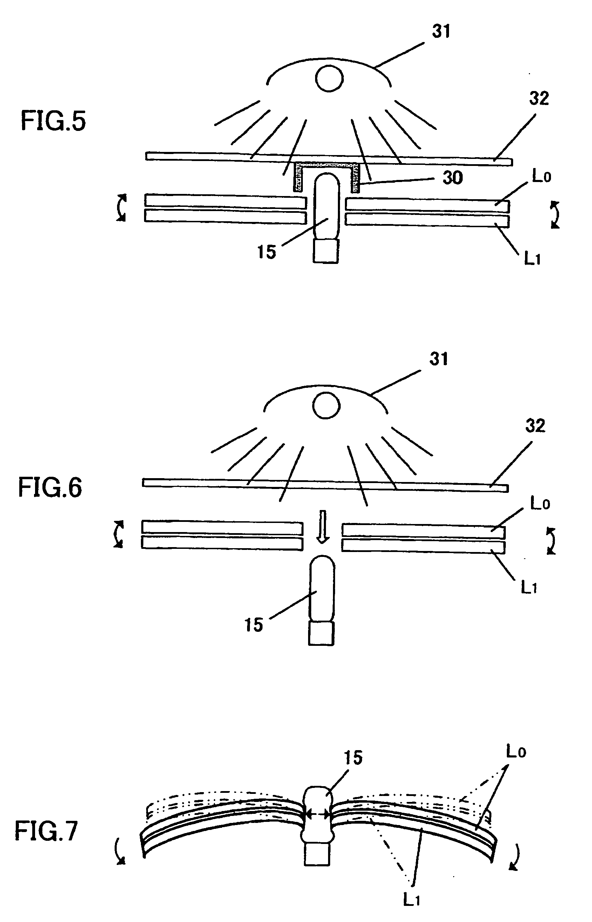

FIG. 5 is a cross sectional view for explaining a UV protection structure with respect to the center pin 15. When carrying out an UV exposure process to cure and fix the bonding glue 11, the center pin 15 is hidden by a cap 30 shown in FIG. 5, so as to protect the resiliently deformable material such as the rubber material forming the center pin 15 from being directly irradiated by the UV ray from an UV lamp 31. FIG. 5 also shows a table 32 of a main apparatus body of the recording medium producing apparatus.

FIG. 6 is a cross sectional view for explaining another UV protection structure with respect to the center pin 15. In FIG. 6, those parts which are the same as those corresponding parts in FIG. 5 are designated by the same reference numerals, and a description thereof will be omitted. When carrying out the UV exposure process to cure and fix the bonding glue 11, the center pin 15 may be moved to recede below the table 32 that is made of a light blocking material so as not to project upwardly of the table 32 or, the center pin 15 may be maintained stationary and only the table 32 may be moved so that the center pin 15 becomes receded under the table 32, so as to protect the resiliently deformable material such as the rubber material forming the center pin 15 from being directly irradiated by the UV ray from the UV lamp 31.

The center pin 15 and the table 32 simply need to move relative to each other when making the center pin 15 assume the receded position where the center pin 15 will not be directly irradiated by the UV ray from the UV lamp 31 during the UV exposure process. Accordingly, it is sufficient for at least one of the center pin 15 and the table 32 to move, and it is of course possible to move both the center pin 15 and the table 32 when carrying out the UV exposure process.

The resiliently deformable material used for the center pin 15 desirably has resistance against the UV ray, resistance against solvents, and smooth surface with self-lubrication such that the bonding glue 11 uneasily adheres thereon. For example, propylene rubber, butyl rubber, fluorine rubber, silicon rubber and the like may be used as the resiliently deformable material forming the center pin 15.

As described above, the air is supplied to the center pin 15 at the pressure of 2 kg/cm² to 4.5 kg/cm² so that the center pin 15 is sufficiently expanded to obtain the sufficient centering effect. The air pressure may be treated as an arbitrary adjustable parameter, so as to vary the warping and the radial tilt of the outer peripheral parts of the laminated disk substrates L1 and L0 simultaneously as the centering. After the center pin 15 in the expanded state is moved under the UV lamp 31, the center pin 15 is contracted and the UV exposure is started after a time in a range of 0.5 second to 60 seconds to cure and fix the bonding glue 11, and this time from the contraction of the center pin 15 until the UV exposure is started may also be treated as the arbitrary adjustable parameter.

FIG. 7 is a cross sectional view for explaining control of the warping of the outer peripheral parts of the disk substrates L1 and L0. The warping of the outer peripheral parts of the laminated disk substrates L1 and L0 can be controlled by the air pressure used to expand the center pin 15. When the center pin 15 is contracted, the laminated disk substrates L1 and L0 return to the respective original states having the respective original warps from the warped states indicated by two-dot chain lines in approximately 2 to 3 seconds, for example. However, if the laminated disk substrates L1 and L0 kept in the warped state by the expanded center pin 15 for a long time, the radial tilt needs to be adjusted after the laminated disk substrates L1 and L0 are bonded since a relatively large warp remains in such a case.

Accordingly, the UV exposure may be started before the laminated disk substrates L1 and L0 completely return to the respective original states, in 1 to 2 seconds from the time when the center pin 15 is contracted, for example, so as to correct the warps of the laminated disk substrates L1 and L0.

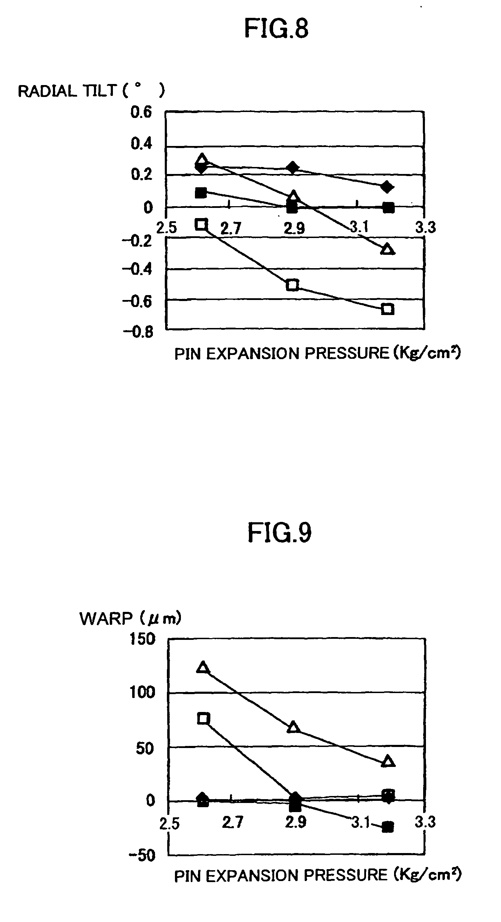

FIG. 8 is a diagram showing a relationship between a pin expansion pressure and the radial tilt (or RD: Radial Deviation), and FIG. 9 is a diagram showing a relationship between the pin expansion pressure and the warp (or DEF: Deflection). The warp (or DEF) indicates the absolute deviation of the disk substrate. The radial tilt (or RD) indicates the warp (or DEF) of the disk substrate in the radial direction by an angle.

In FIGS. 8 and 9 and FIGS. 10 and 11 which will be described later, the time from the contraction of the center pin 15 until the start of the UV exposure was fixed to 1 second, in a state where the vacuum suction at a center of the vacuum laminating table is turned OFF and the laminated disk substrates L1 and L0 (with the disk substrate L1 facing down) do not lie completely flat along the surface of the vacuum laminating table, and only the air pressure applied to the center pin 15 was varied for the measurements shown. Further, in FIGS. 8 and 9 and FIGS. 10 and 11 which will be described later, black diamond marks indicate maximum values measured at a radial position having a radius of 23 mm, black square marks indicate minimum values measured at a radial position having a radius of 23 mm, white triangular marks indicate maximum values measured at the radial position having the radius of 58 mm, and white square marks indicate minimum values measured at the minimum radial position having the radius of 58 mm, with respect to the lower disk substrate L1. Although the lower disk substrate L1 receives pressure from the vacuum laminating table when the center pin 15 is expanded, the present inventor has found that the measurements made with respect to the lower disk substrate L1 are satisfactory and that the measured values may be used as approximate values of the upper disk substrate L0.

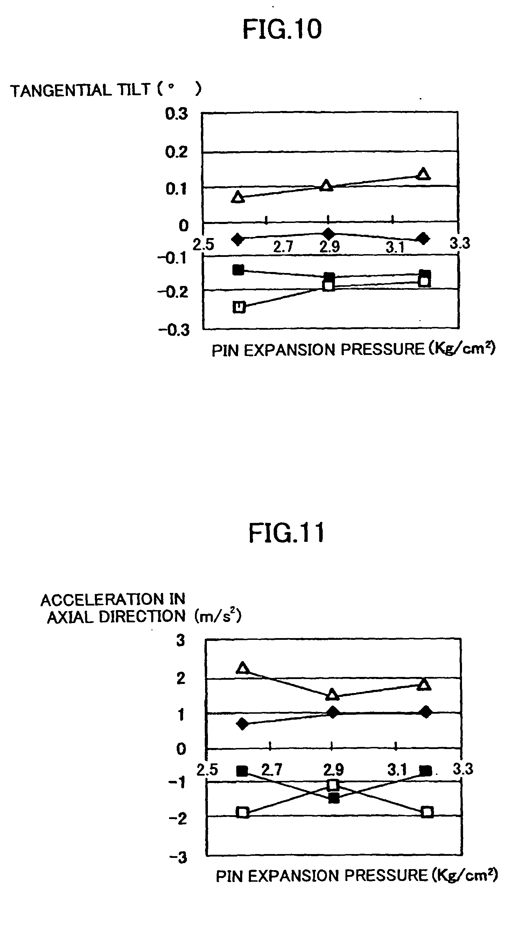

FIG. 10 is a diagram showing a relationship between the pin expansion pressure and a tangential tilt (or TD: Tangential Deviation), and FIG. 11 is a diagram showing a relationship between the pin expansion pressure and an acceleration in an axial direction (or A_ACC: Axial Acceleration), for the case shown in FIGS. 8 and 9. The tangential tilt (or TD) indicates the warp (or DEF) of the disk substrate in the circumferential direction by an angle. The tangential tilt shown in FIG. 10 was measured for a case where the Constant Linear Velocity (CLV) is employed and the recording medium is rotated at a velocity of 3.5 m/s, using a measuring apparatus Biref-126P manufactured by Dr. Schenk. The axial acceleration (or A_ACC) indicates the acceleration of the disk substrate in a direction perpendicular to a reference surface such as a recording surface of the recording medium. If this axial acceleration is large due to undulations of the disk substrate, the response and stability of the focus servo and/or the tracking servo with respect to the recording medium deteriorate. According to the DVD+R/RW Orange Book, for example, the required axial acceleration is approximately 2.1 m/s² or less. It was confirmed from FIGS. 10 and 11 that the tangential tilt and the axial acceleration of the laminated disk substrates L0 and L1 are unaffected, and that there is no undesirable effects of the radial tilt control. In FIG. 10, the axial acceleration is approximately 2.1 m/s² or less, and thus, the response and stability of the focus servo and/or the tracking servo with respect to the recording medium can be improved.

In the embodiment described above, it is of course possible to form the optical disk by centering and bonding three or more disk substrates. When bonding three disk substrates, for example, the bonding glue is coated on the top surface of the bottom disk substrate, the bonding glue is desirably coated on both the top and bottom surfaces of the middle disk substrate, and the bonding glue is coated on the bottom surface of the top disk substrate.

Furthermore, the recording medium producing method and apparatus may be similarly applied to the production of magnetic recording media such as magnetic disks.

Therefore, the recording medium producing method according to the present invention and the recording medium producing apparatus according to the present invention are suitably applicable to the bonding process in which a plurality of disk substrates are centered and bonded when producing information recording media such as optical disks. In addition, the present invention is similarly applicable to a process other than the optical and magnetic disk producing processes, which requires various disk substrates to be centered with a high precision and bonded together.

Further, the present invention is not limited to these embodiments, but various variations and modifications may be made within the scope of the claims.

## Claims

1. A recording medium producing method for producing an information recording medium by bonding a plurality of disk substrates (L0, L1) having centre holes (13, 14), comprising:
a bonding process in which the plurality of disk substrates (L0, L1) are centered and bonded,
said bonding process including a real centering to insert a resiliently deformable centre pin (15) into the centre holes (13, 14) of the plurality of disk substrates (L0, L1), and to expand the centre pin (15) from a contracted state to an expanded state so that the centre pin (15) in the expanded state pushes against inner peripheral parts of the plurality of disk substrates (L0, L1) defining the centre holes (13, 14),
**characterized in that** the bonding process further includes:
a coating and laminating to spin-coat a layer of an adhesive agent (11) on a surface of each of the plurality of disk substrates (L0, L1), and to laminate the plurality of disk substrates (L0, L1), prior to the real centering;
a moving to move the centre pin (15) in the expanded state to a position under an ultraviolet lamp (31) after the real centering and then contracting the centre pin (15) to the contracted state; and
an exposing to expose the plurality of disk substrates (L0, L1) to an ultraviolet ray from the ultraviolet lamp (31) after a predetermined time from the contracting of the centre pin (15), so as to cure the adhesive agent (11).

2. The recording medium producing method as claimed in claim 1, **characterized in that** the centre pin (15) has a hollow structure and is approximately cylindrical in shape, with a cross section taken along a plane perpendicular to an axial direction thereof that is a true circle in the contracted state and maintains a larger true circle in the expanded state; the centre pin (15) has a diameter which is at least 0.2 mm greater in the expanded state than a diameter of a largest one of the centre holes (13, 14) in the plurality of disk substrates (L0, L1) to be centered; and the centre pin (15) in the expanded state pushes the inner peripheral parts of the plurality of disk substrates (L0, L1) at the centre holes (13, 14) towards an outer peripheral direction with a uniform pressure for the entire 360 degree angular range.

3. The recording medium producing method as claimed in claim 1 or 2, **characterized in that** the real centering supplies a gas or a liquid into the centre pin (15) when expanding the centre pin (15) to the expanded state.

4. The recording medium producing method as claimed in claim 3, wherein the gas or liquid is supplied to the centre pin (15) at a pressure of 2 kg/cm² to 4.5 kg/cm² so that the centre pin (15) is sufficiently expanded to obtain a centering effect.

5. The recording medium producing method as claimed in any of claims 1 to 4, **characterized in that** the centre pin (15) is made of a resiliently deformable material having a suitable hardness and thickness so that the centre pin (15) is sufficiently compliant and resiliently deforms to conform to the inner peripheral parts of the plurality of disk substrates (L0, L1) at the centre holes (13, 14) having mutually different diameters, when the centre pin (15) is the expanded state pushes the inner peripheral parts of the plurality of disk substrates (L0, L1) at the centre holes (13, 14) towards an outer peripheral direction.

6. The recording medium producing method as claimed in any of claims 1 to 4, **characterized in that** the centre pin (15) is inserted into the centre holes (13, 14) of the plurality of disk substrates (L0, L1) in the contracted state so as to minimize friction between the centre pin (15) and the inner peripheral parts of the plurality of disk substrates (L0, L1), and a predetermined pressure is thereafter applied to the centre pin (15) to expand the centre pin (15) to the expanded state for the real centering.

7. The recording medium producing method as claimed in any of claims 1 to 6, **characterized in that** the bonding process further includes, prior to the real centering:
a provisional centering to insert a center holding member (10) having a holding pin diameter which is 0.015 mm to 0.05 mm smaller than a diameter of a smallest one of the centre holes (13, 14) of the plurality of disk substrates (L0, L1) to be provisionally centered.

8. The recording medium producing method as claimed in any one preceding claim, **characterized in that** the predetermined time is adjusted within a range of 0.5 second to 60 seconds.

9. The recording medium producing method as claimed in claim 1 or 8, **characterized in that** the ultraviolet ray from the ultraviolet lamp (31) is blocked from reaching the centre pin (15) when exposing the plurality of disk substrates (L0, L1) to the ultraviolet ray.

10. The recording medium producing method as claimed in claim 1 or 8, **characterized in that** the centre pin (15) is moved to a position where the ultraviolet ray from the ultraviolet lamp (31) is prevented from reaching the centre pin (15) when exposing the plurality of disk substrates (L0, L1) to the ultraviolet ray.

11. The recording medium producing method as claimed in claim 1 or 8, **characterized in that** a blocking member (30) is moved to block the ultraviolet ray from the ultraviolet lamp (31) from reaching the centre pin (15), without moving the centre pin (15), when exposing the plurality of disk substrates (L0, L1) to the ultraviolet ray.

12. The recording medium producing method as claimed in any of claims 1 to 11, **characterized in that** the centre pin (15) is made of a resiliently deformable material having resistance against ultraviolet ray, resistance against solvents, and smooth surface with self-lubrication such that a bonding glue uneasily adheres thereon.

13. A recording medium producing apparatus for producing an information recording medium by bonding a plurality of disk substrates (L0, L1) having centre holes (13, 14), comprising:
a resiliently deformable centre pin (15) that is inserted into the centre holes (13, 14) of the plurality of disk substrates (L0, L1), when carrying out a real centering of a bonding process in which the plurality of disk substrates (L0, L1) are centered and bonded; and
means (20,21) for expanding the centre pin (15) from a contracted state to an expanded state so that the centre pin (15) in the expanded state pushes against inner peripheral parts of the plurality of disk substrates (L0, L1) defining the centre holes (13, 14),
**characterized in that**:
the apparatus includes means for coating in the bonding process a layer of an adhesive agent (11) on a surface of each of the plurality of disk substrates (L0, L1), prior to the real centering, and means for laminating in a laminating process the plurality of disk substrates (L0, L1) via the adhesive agent (11) in a vacuum, prior to the real centering, and that the recording medium producing apparatus further comprises:
means for moving the centre pin (15) in the expanded state to a position under an ultraviolet lamp (31) after the real centering and then contracting the centre pin (15) to the contracted state; and
means for exposing the plurality of disk substrates (L0, L1) to an ultraviolet ray from the ultraviolet lamp (31) after a predetermined time from the contracting of the centre pin (15), so as to cure the adhesive agent (11).

14. The recording medium producing apparatus as claimed in claim 13, **characterized in that** the means for expanding the centre pin (15) supplies a gas or a liquid into the centre pin (15) when expanding the centre pin (15) to the expanded state.

15. The recording medium producing apparatus as claimed in claim 14, wherein the means for expanding the centre pin (15) supplies the gas or liquid to the centre pin (15) at a pressure of 2 kg/cm² to 4.5 kg/cm² so that the centre pin (15) is sufficiently expanded to obtain a centering effect.

16. The recording medium producing apparatus as claimed in claim 13, 14 or 15, **characterized in that** the centre pin (15) has a hollow structure and is approximately cylindrical in shape, with a cross section taken along a plane perpendicular to an axial direction thereof that is a true circle in the contracted state and maintains a larger true circle in the expanded state, the centre pin (15) has a diameter which is at least 0.2 mm greater in the expanded state than a diameter of a largest one of the centre holes (13, 14) in the plurality of disk substrates (L0, L1) to be centered; and the centre pin (15) in the expanded state pushes the inner peripheral parts of the plurality of disk substrates (L0, L1) as the centre holes (13, 14) towards an outer peripheral direction with a uniform pressure for the entire 360 degree angular range.

17. The recording medium producing apparatus as claimed in any of claims 13 to 16, **characterized in that** the centre pin (15) is made of a resiliently deformable material having a suitable hardness and thickness so that the centre pin (15) is sufficiently compliant and resiliently deforms to conform to the inner peripheral parts of the plurality of disk substrates (L0, L1) at the centre holes (13, 14) having mutually different diameters, when the centre pin (15) in the expanded state pushes the inner peripheral parts of the plurality of disk substrates (L0, L1) at the centre holes (13, 14) towards an outer peripheral direction.

18. The recording medium producing apparatus as claimed in any of claims 13 to 17, **characterized in that** the centre pin (15) is inserted into the centre holes (13, 14) of the plurality of disk substrates (L0, L1) in the contracted state so as to minimize friction between the centre pin (15) and the inner peripheral parts of the plurality of disk substrates (L0, L1), and the means for expanding the centre pin (15) thereafter applies a predetermined pressure to the centre pin (15) to expand the centre pin (15) to the expanded state for the real centering.

19. The recording medium producing apparatus as claimed in any of claims 13 to 18, further **characterized by**:
a center holding member (10) that is inserted into the centre holes (13, 14) of the plurality of disk substrates (L0, L1) that are laminated and are to be provisionally centered, prior to the real centering, said center holding member (10) having a holding pin diameter which is 0.015 mm to 0.05 mm smaller than a diameter of a smallest one of the centre holes (13, 14) of the plurality of disk substrates (L0, L1) to be provisionally centered.

20. The recording medium producing apparatus as claimed in any one of claims 13 to 19, **characterized in that** the predetermined time is adjusted within a range of 0.5 second to 60 seconds.

21. The recording medium producing apparatus as claimed in claim 13 or 20, further **characterized by**:
a cap (30) that blocks the ultraviolet ray from the ultraviolet lamp (31) from reaching the centre pin (15) when exposing the plurality of disk substrates (L0, L1) to the ultraviolet ray.

22. The recording medium producing apparatus as claimed in claim 13 or 20, **characterized in that** the means for moving the centre pin (15) moves the centre pin (15) to a position under a table (32) where the ultraviolet ray from the ultraviolet lamp (31) is prevented from reaching the centre pin (15) when exposing the plurality of disk substrates (L0, L1) to the ultraviolet ray.

23. The recording medium producing apparatus as claimed in claim 13 or 20, further **characterised by**:
a blocking member (30) that moves to block the ultraviolet ray from the ultraviolet lamp (31) from reaching the centre pin (15), without requiring the centre pin (15) to move, when exposing the plurality of disk substrates (L0, L1) to the ultraviolet ray.

24. The recording medium producing apparatus as claimed in any of claims 13 to 23, **characterized in that** the centre pin (15) is made of a resiliently deformable material having resistance against ultraviolet ray, resistance against solvents, and smooth surface with self-lubrication such that a bonding glue uneasily adheres thereon.

25. A method as claimed in any one of claims 1 to 12, wherein the recording medium is an optical recording medium or a magnetic recording medium.

## Patentansprüche

1. Aufzeichnungsmedium erzeugendes Verfahren zum Erzeugen eines Informationsaufzeichnungsmediums durch Zusammenfügen einer Mehrzahl CD-Substrate (L0, L1) mit Mittellöchern (13, 14), umfassend:
einen Zusammenfügungsvorgang, in dem die Mehrzahl CD-Substrate (L0, L1) zentriert und zusammengefügt wird,
den Zusammenfügungsvorgang einschließlich einem echten Zentrieren, um einen elastisch verformbaren Zentrierstift (15) in die Mittellöcher (13, 14) der Mehrzahl CD-Substrate (L0, L1) einzuführen und den Zentrierstift (15) aus einem kontrahierten Zustand in einen expandierten Zustand zu expandieren, so dass der Zentrierstift (15) im expandierten Zustand gegen die inneren peripheren Teile der Mehrzahl CD-Substrate (L0, L1), welche die Mittellöcher definieren, drückt.
**dadurch gekennzeichnet, dass** der Zusammenfügungsvorgang ferner umfasst:
ein Beschichten und Laminieren, um vor dem echten Zentrieren eine Oberfläche eines jeden CD-Substrats der Mehrzahl CD-Substrate (L0, L1) mit einer Schicht eines Bindemittels (11) rotationszubeschichten und die Mehrzahl CD-Substrate (L0, L1) zu laminieren;
ein Bewegen, um den Zentrierstift (15) im expandierten Zustand nach dem echten Zentrieren in eine Position unter eine ultraviolette Lampe (31) zu bewegen und anschließend den Zentrierstift (15) in den kontrahierten Zustand zu kontrahieren; und
ein Freilegen, um die Mehrzahl CD-Substrate (L0, L1) nach einer vorbestimmten Zeit im Anschluss an das Kontrahieren des Zentrierstifts (15) einem Ultraviolettstrahl der Ultraviolettlampe (31) auszusetzen, um das Bindemittel (11) auszuhärten.

2. Aufzeichnungsmedium erzeugendes Verfahren nach Anspruch 1, **dadurch gekennzeichnet, dass** der Zentrierstift (15) eine hohle Struktur aufweist und annähernd zylinderförmig ist, wobei ein Querschnitt entlang einer Fläche senkrecht zu einer Axialrichtung davon ein echter Kreis in dem kontrahierten Zustand ist und in dem expandierten Zustand einen größeren echten Kreis beibehält; der Zentrierstift (15) einen Durchmesser aufweist, der in dem expandierten Zustand mindestens 0,2mm größer ist als ein Durchmesser des größten der Mittellöcher (13, 14) in der Mehrzahl der zu zentrierenden CD-Substrate (L0, L1); und der Zentrierstift (15) in dem expandierten Zustand die inneren peripheren Teile der Mehrzahl CD-Substrate (L0, L1) an den Mittellöchern (13, 14) in eine äußere periphere Richtung drückt, bei einem gleichmäßigen Druck für den gesamten 360° Winkel.

3. Aufzeichnungsmedium erzeugendes Verfahren nach Anspruch 1 oder 2, **dadurch gekennzeichnet, dass** das echte Zentrieren ein Gas oder eine Flüssigkeit in den Zentrierstift (15) liefert, wenn der Zentrierstift (15) in den expandierten Zustand expandiert wird.

4. Aufzeichnungsmedium erzeugendes Verfahren nach Anspruch 3, **dadurch gekennzeichnet, dass** das Gas oder eine Flüssigkeit mit einem Druck von 2kg/cm² bis 4,5kg/cm² in den Zentrierstift (15) geliefert wird, so dass der Zentrierstift (15) ausreichend expandiert wird, um einen Zentriereffekt zu erhalten.

5. Aufzeichnungsmedium erzeugendes Verfahren nach einem der Ansprüche 1 bis 4, **dadurch gekennzeichnet, dass** der Zentrierstift (15) aus einem elastisch verformbaren Material mit einer angemessenen Härte und Dicke besteht, so dass der Zentrierstift (15) ausreichend nachgiebig ist und sich elastisch verformt, um den inneren peripheren Teilen der Mehrzahl CD-Substrate (L0, L1) an den Mittellöchern (13, 14) zu entsprechen, welche unterschiedliche Durchmesser aufweisen, wenn der Zentrierstift (15) im expandierten Zustand die inneren peripheren Teile der Substrate (L0, L1) an den Mittellöchern (13, 14) in Richtung einer äußeren peripheren Richtung drückt.

6. Aufzeichnungsmedium erzeugendes Verfahren nach einem der Ansprüche 1 bis 4, **dadurch gekennzeichnet, dass** der Zentrierstift (15) in die Mittellöcher (13, 14) der Mehrzahl CD-Substrate (L0, L1) im kontrahierten Zustand eingefügt wird, um die Reibung zwischen dem Zentrierstift (15) und den inneren peripheren Teilen der Mehrzahl CD-Substrate (L0, L1) zu minimieren, und anschließend wird ein vorbestimmter Druck auf den Zentrierstift (15) angewendet, um den Zentrierstift (15) für das echte Zentrieren in den expandierten Zustand zu expandieren.

7. Aufzeichnungsmedium erzeugendes Verfahren nach einem der Ansprüche 1 bis 6, **dadurch gekennzeichnet, dass** der Zusammenfügungsvorgang vor dem echten Zentrieren ferner umfasst:
ein provisorisches Zentrieren, um ein Mittelhalteelement (10) einzufügen mit einem Haltestiftdurchmesser, der 0,015mm bis 0,05mm kleiner ist als ein Durchmesser des kleinsten der Mittellöcher (13, 14) der Mehrzahl CD-Substrate (L0, L1), die provisorisch zentriert werden sollen.

8. Aufzeichnungsmedium erzeugendes Verfahren nach einem der vorangegangenen Ansprüche, **dadurch gekennzeichnet, dass** die vorbestimmte Zeit innerhalb eines Bereichs von 0,5 bis 60 Sekunden eingestellt wird.

9. Aufzeichnungsmedium erzeugendes Verfahren nach Anspruch 1 oder 8, **dadurch gekennzeichnet, dass** der Ultraviolettstrahl der Ultraviolettlampe (31) vom Erreichen des Zentrierstifts (15) blockiert wird, wenn die Mehrzahl CD-Substrate (L0, L1) dem Ultraviolettstrahl ausgesetzt wird.

10. Aufzeichnungsmedium erzeugendes Verfahren nach Anspruch 1 oder 8, **dadurch gekennzeichnet, dass** der Zentrierstift (15) in eine Position bewegt wird, in der verhindert wird, dass der Ultraviolettstrahl der Ultraviolettlampe (31) den Zentrierstift (15) erreicht, wenn die Mehrzahl CD-Substrate (L0, L1) dem Ultraviolettstrahl ausgesetzt wird.

11. Aufzeichnungsmedium erzeugendes Verfahren nach Anspruch 1 oder 8, **dadurch gekennzeichnet, dass** ein Blockierelement (30) bewegt wird, um den Ultraviolettstrahl der Ultraviolettlampe (30) vom Erreichen des Zentrierstifts (31) zu blockieren, ohne dabei den Zentrierstift (15) zu bewegen, wenn die Mehrzahl CD-Substrate (L0, L1) dem Ultraviolettstrahl ausgesetzt wird.

12. Aufzeichnungsmedium erzeugendes Verfahren nach einem der Ansprüche 1 bis 11, **dadurch gekennzeichnet, dass** der Zentrierstift (15) aus einem elastisch verformbaren Material besteht mit einer Resistenz gegen Ultraviolettstrahlen, Lösungsmittel und einer gleichmäßigen Oberfläche mit Selbstschmierung, so dass ein Bindemittel nicht gut daran haftet.

13. Aufzeichnungsmedium erzeugende Vorrichtung zum Erzeugen eines Informationsaufzeichnungsmediums durch Zusammenfügen einer Mehrzahl CD-Substrate (L0, L1) mit Mittellöchern (13, 14), umfassend:
einen elastisch verformbaren Zentrierstift (15), der in die Mittellöcher (13, 14) der Mehrzahl CD-Substrate (L0, L1) eingefügt wird, wenn ein echtes Zentrieren eines Zusammenfügungsvorgangs ausgeführt wird, bei dem die Mehrzahl CD-Substrate (L0, L1) zentriert und zusammengefügt werden; und
Mittel (20, 21) zum Expandieren des Zentrierstifts (15) aus einem kontrahierten Zustand in einen expandierten Zustand, so dass der Zentrierstift (15) im expandierten Zustand gegen die inneren peripheren Teile der Mehrzahl CD-Substrate (L0, L1), welche die Mittellöcher (13, 14) definieren, drückt,
**dadurch gekennzeichnet, dass** die Vorrichtung Mittel umfasst, um in dem Zusammenfügungsvorgang vor dem echten Zentrieren eine Oberfläche eines jeden der Mehrzahl CD-Substrate (L0, L1) mit einer Schicht eines Bindemittels (11) zu beschichten und Mittel, um in einem Laminiervorgang vor dem echten Zentrieren eine Mehrzahl CD-Substrate (L0, L1) mittels einem Bindemittel (11) in einem Vakuum zu laminieren, und **dadurch**, dass die Aufzeichnungsmedium erzeugende Vorrichtung ferner umfasst:
Mittel, um den Zentrierstift (15) im expandierten Zustand nach dem echten Zentrieren in eine Position unter eine ultraviolette Lampe (31) zu bewegen und anschließend den Zentrierstift (15) in den kontrahierten Zustand zu kontrahieren; und
Mittel, um die Mehrzahl CD-Substrate (L0, L1) nach einer vorbestimmten Zeit im Anschluss an das Kontrahieren des Zentrierstifts (15) einem Ultraviolettstrahl der Ultraviolettlampe (31) auszusetzen, um das Bindemittel (11) auszuhärten.

14. Aufzeichnungsmedium erzeugende Vorrichtung nach Anspruch 13, **dadurch gekennzeichnet, dass** das Mittel zum Expandieren des Zentrierstifts (15) ein Gas oder eine Flüssigkeit in den Zentrierstift (15) liefert, wenn der Zentrierstift (15) in den expandierten Zustand expandiert wird.

15. Aufzeichnungsmedium erzeugende Vorrichtung nach Anspruch 14, **dadurch gekennzeichnet, dass** das Mittel zum Expandieren des Zentrierstifts (15) das Gas oder eine Flüssigkeit mit einem Druck von 2kg/cm² bis 4,5kg/cm² in den Zentrierstift (15) liefert, so dass der Zentrierstift (15) ausreichend expandiert wird, um einen Zentriereffekt zu erhalten.

16. Aufzeichnungsmedium erzeugende Vorrichtung nach Anspruch 13, 14 oder 15, **dadurch gekennzeichnet, dass** der Zentrierstift (15) eine hohle Struktur aufweist und annähernd zylinderförmig ist, wobei ein Querschnitt entlang einer Fläche senkrecht zu einer Axialrichtung davon ein echter Kreis in dem kontrahierten Zustand ist und im expandierten Zustand einen größeren echten Kreis beibehält; der Zentrierstift (15) einen Durchmesser aufweist, der in dem expandierten Zustand mindestens 0,2mm größer ist als ein Durchmesser des größten der Mittellöcher (13, 14) in der Mehrzahl der zu zentrierenden CD-Substrate (L0, L1); und der Zentrierstift (15) im expandierten Zustand die inneren peripheren Teile der Mehrzahl CD-Substrate (L0, L1) an den Mittellöchern (15, L0, L1) in eine äußere periphere Richtung drückt bei einem gleichmäßigen Druck für den gesamten 360° Winkel.

17. Aufzeichnungsmedium erzeugende Vorrichtung nach einem der Ansprüche 13 bis 16, **dadurch gekennzeichnet, dass** der Zentrierstift (15) aus einem elastisch verformbaren Material mit einer angemessenen Härte und Dicke besteht, so dass der Zentrierstift (15) ausreichend nachgiebig ist und sich elastisch verformt, um den inneren peripheren Teilen der Mehrzahl CD-Substrate (L0, L1) an den Mittellöchern (13, 14) zu entsprechen, welche unterschiedliche Durchmesser aufweisen, wenn der Zentrierstift (15) im expandierten Zustand die inneren peripheren Teile der Substrate (L0, L1) an den Mittellöchern (13, 14) in Richtung einer äußeren peripheren Richtung drückt.

18. Aufzeichnungsmedium erzeugende Vorrichtung nach einem der Ansprüche 13 bis 17, **dadurch gekennzeichnet, dass** der Zentrierstift (15) im kontrahierten Zustand in die Mittellöcher (13, 14) der Mehrzahl CD-Substrate (L0, L1) eingefügt wird, um die Reibung zwischen dem Zentrierstift (15) und den inneren peripheren Teilen der Mehrzahl CD-Substrate (L0, L1) zu minimieren, und das Mittel zum Expandieren des Zentrierstifts (15) anschließend einen vorbestimmten Druck auf den Zentrierstift (15) anwendet, um den Zentrierstift (15) für das echte Zentrieren in den expandierten Zustand zu expandieren.

19. Aufzeichnungsmedium erzeugende Vorrichtung nach einem der Ansprüche 13 bis 18, ferner **gekennzeichnet, durch**:
ein Mittelhalteelement (10), das in die Mittellöcher (13, 14) der Mehrzahl CD-Substrate (L0, L1) eingefügt ist, welche laminiert sind und vor dem echten Zentrieren provisorisch zentriert werden sollen, wobei das Mittelhalteelement (10) einen Haltestiftdurchmesser aufweist, der 0,015 bis 0,05mm kleiner ist als der Durchmesser des kleinsten der Mittellöcher (13, 14) der Mehrzahl CD-Substrate (L0, L1), die provisorisch zentriert werden sollen.

20. Aufzeichnungsmedium erzeugende Vorrichtung nach einem der Ansprüche 13 bis 19, **dadurch gekennzeichnet, dass** die vorbestimmte Zeit innerhalb eines Bereichs von 0,5 bis 60 Sekunden eingestellt wird.

21. Aufzeichnungsmedium erzeugende Vorrichtung nach Anspruch 13 oder 20, ferner **gekennzeichnet durch**:
einen Aufsatz (30), der den Ultraviolettstrahl der Ultraviolettlampe (31) blockiert, den Zentrierstift (15) zu erreichen, wenn die Mehrzahl CD-Substrate (L0, L1) dem Ultraviolettstrahl ausgesetzt wird.

22. Aufzeichnungsmedium erzeugende Vorrichtung nach Anspruch 13 oder 20, **dadurch gekennzeichnet, dass** das Mittel zum Bewegen des Zentrierstifts (15) den Zentrierstift (15) in eine Position unter einen Tisch (32) bewegt, in der verhindert wird, dass der Ultraviolettstrahl der Ultraviolettlampe (15) den Zentrierstift (15) erreicht, wenn die Mehrzahl CD-Substrate (L0, L1) dem Ultraviolettstrahl ausgesetzt wird.

23. Aufzeichnungsmedium erzeugende Vorrichtung nach Anspruch 13 oder 20, ferner **gekennzeichnet durch**:
ein Blockierelement (30), das sich bewegt, um den Ultraviolettstrahl der Ultraviolettlampe (31) zu blockieren, den Zentrierstift (15) zu erreichen, wenn die Mehrzahl CD-Substrate (L0, L1) dem Ultraviolettstrahl ausgesetzt wird, ohne dabei den Zentrierstift (15) zu bewegen.

24. Aufzeichnungsmedium erzeugende Vorrichtung nach einem der Ansprüche 13 bis 23, **dadurch gekennzeichnet, dass** der Zentrierstift (15) aus einem elastisch verformbaren Material besteht mit einer Resistenz gegen Ultraviolettstrahlen, Lösungsmittel und einer gleichmäßigen Oberfläche mit Selbstschmierung, so dass ein Bindemittel nicht gut daran haftet.

25. Verfahren nach einem der Ansprüche 1 bis 12, **dadurch gekennzeichnet, dass** das Aufzeichnungsmedium ein optisches Aufzeichnungsmedium oder ein magnetisches Aufzeichnungsmedium ist.

## Revendications

1. Procédé de fabrication de support d'enregistrement pour fabriquer un support d'enregistrement d'informations en collant une pluralité de substrats de disque (L0, L1) comportant des trous centraux (13, 14), comprenant :
un processus de collage dans lequel la pluralité de substrats de disque (L0, L1) sont centrés et collés,
ledit processus de collage comprenant un centrage réel pour insérer une broche centrale (15) déformable élastiquement dans les trous centraux (13, 14) de la pluralité de substrats de disque (L0, L1), et pour étendre la broche centrale (15) d'un état contracté dans un état étendu de sorte que la broche centrale (15) dans l'état étendu pousse contre les parties périphériques intérieures de la pluralité de substrats de disque (L0, L1) définissant les trous centraux (13, 14),
**caractérisé en ce que** le processus de collage comprend en outre :
un revêtement et une lamification pour déposer par centrifugation une couche d'un agent adhésif (11) sur une surface de chacun de la pluralité de substrats de disque (L0, L1), et pour lamifier la pluralité de substrats de disque (L0, L1), avant le centrage réel ;
un déplacement pour déplacer la broche centrale (15) dans l'état étendu à une position au-dessous d'une lampe à rayons ultraviolets (31) après le centrage réel et ensuite une contraction de la broche centrale (15) dans l'état contracté ; et
une exposition pour exposer la pluralité de substrats de disque (L0, L1) à un rayon ultraviolet provenant de la lampe à rayons ultraviolets (31) un temps prédéterminé après la contraction de la broche centrale (15), de manière à durcir l'agent adhésif (11).

2. Procédé de fabrication de support d'enregistrement selon la revendication 1, **caractérisé en ce que** la broche centrale (15) a une structure creuse et a une forme à peu près cylindrique, une section transversale prise le long d'un plan perpendiculaire à une direction axiale de celle-ci étant un cercle vrai dans l'état contracté et restant un cercle vrai plus grand dans l'état étendu ; la broche centrale (15) a un diamètre qui est plus grand d'au moins 0,2 mm dans l'état étendu qu'un diamètre d'un plus grand des trous centraux (13, 14) dans la pluralité de substrats de disque (L0, L1) devant être centrés ; et la broche centrale (15) dans l'état étendu pousse les parties périphériques internes de la pluralité de substrats de disque (L0, L1) au niveau des trous centraux (13, 14) vers une direction périphérique extérieure avec une pression uniforme pour la plage angulaire de 360 degrés entière.

3. Procédé de fabrication de support d'enregistrement selon la revendication 1 ou 2, **caractérisé en ce que** le centrage réel délivre un gaz ou un liquide dans la broche centrale (15) lors de l'extension de la broche centrale (15) dans l'état étendu.

4. Procédé de fabrication de support d'enregistrement selon la revendication 3, dans lequel le gaz ou le liquide est délivré à la broche centrale (15) à une pression de 2 kg/cm² à 4,5 kg/cm² de sorte que la broche centrale (15) soit suffisamment étendue pour obtenir un effet de centrage.

5. Procédé de fabrication de support d'enregistrement selon l'une quelconque des revendications 1 à 4, **caractérisé en ce que** la broche centrale (15) est réalisée en un matériau déformable élastiquement ayant une dureté et une épaisseur appropriées de sorte que la broche centrale (15) soit suffisamment souple et se déforme élastiquement pour se conformer aux parties périphériques intérieures de la pluralité de substrats de disque (L0, L1) au niveau des trous centraux (13, 14) ayant des diamètres mutuellement différents, lorsque la broche centrale (15) dans l'état étendu pousse les parties périphériques intérieures de la pluralité de substrats de disque (L0, L1) au niveau des trous centraux (13, 14) vers une direction périphérique extérieure.

6. Procédé de fabrication de support d'enregistrement selon l'une quelconque des revendications 1 à 4, **caractérisé en ce que** la broche centrale (15) est insérée dans les trous centraux (13, 14) de la pluralité de substrats de disque (L0, L1) dans l'état contracté de manière à réduire à un minimum un frottement entre la broche centrale (15) et les parties périphériques intérieures de la pluralité de substrats de disque (L0, L1), et une pression prédéterminée est ensuite appliquée à la broche centrale (15) pour étendre la broche centrale (15) dans l'état étendu pour le centrage réel.

7. Procédé de fabrication de support d'enregistrement selon l'une quelconque des revendications 1 à 6, **caractérisé en ce que** le processus de collage comprend en outre, avant le centrage réel :
un centrage provisoire pour insérer un élément de support central (10) ayant un diamètre de broche de support qui est plus petit de 0,015 mm à 0,05 mm qu'un diamètre d'un plus petit des trous centraux (13, 14) de la pluralité de substrats de disque (L0, L1) devant être centrés provisoirement.

8. Procédé de fabrication de support d'enregistrement selon l'une quelconque des revendications précédentes, **caractérisé en ce que** le temps prédéterminé est ajusté dans une plage de 0,5 seconde à 60 secondes.

9. Procédé de fabrication de support d'enregistrement selon la revendication 1 ou 8, **caractérisé en ce que** le rayon ultraviolet provenant de la lampe à rayons ultraviolets (31) est empêché d'atteindre la broche centrale (15) lors de l'exposition de la pluralité de substrats de disque (L0, L1) au rayon ultraviolet.

10. Procédé de fabrication de support d'enregistrement selon la revendication 1 ou 8, **caractérisé en ce que** la broche centrale (15) est déplacée à une position où le rayon ultraviolet provenant de la lampe à rayons ultraviolets (31) est empêché d'atteindre la broche centrale (15) lors de l'exposition de la pluralité de substrats de disque (L0, L1) au rayon ultraviolet.

11. Procédé de fabrication de support d'enregistrement selon la revendication 1 ou 8, **caractérisé en ce qu'**un élément de blocage (30) est déplacé pour empêcher le rayon ultraviolet provenant de la lampe à rayons ultraviolets (31) d'atteindre la broche centrale (15), sans déplacer la broche centrale (15), lors de l'exposition de la pluralité de substrats de disque (L0, L1) au rayon ultraviolet.

12. Procédé de fabrication de support d'enregistrement selon l'une quelconque des revendications 1 à 11, **caractérisé en ce que** la broche centrale (15) est réalisée en un matériau déformable élastiquement ayant une résistance au rayon ultraviolet, une résistance aux solvants, et une surface lisse autolubrifiante de sorte qu'une colle adhère difficilement à celle-ci.

13. Dispositif de fabrication de support d'enregistrement pour fabriquer un support d'enregistrement d'informations en collant une pluralité de substrats de disque (L0, L1) comportant des trous centraux (13, 14), comprenant :
une broche centrale (15) déformable élastiquement qui est insérée dans les trous centraux (13, 14) de la pluralité de substrats de disque (L0, L1), lors de l'exécution d'un centrage réel d'un processus de collage au cours duquel la pluralité de substrats de disque (L0, L1) sont centrés et collés ; et
des moyens (20, 21) pour étendre la broche centrale (15) d'un état contracté dans un état étendu de sorte que la broche centrale (15) dans l'état étendu pousse contre les parties périphériques intérieures de la pluralité de substrats de disque (L0, L1) définissant les trous centraux (13, 14),
**caractérisé en ce que** :
le dispositif comprend des moyens pour déposer, au cours du processus de collage, une couche d'un agent adhésif (11) sur une surface de chacun de la pluralité de substrats de disque (L0, L1), avant le centrage réel, et des moyens pour lamifier, au cours d'un processus de lamification, la pluralité de substrats de disque (L0, L1) via l'agent adhésif (11) dans un vide, avant le centrage réel, et **en ce que** le dispositif de fabrication de support d'enregistrement comprend en outre :
des moyens pour déplacer la broche centrale (15) dans l'état étendu à une position au-dessous d'une lampe à rayons ultraviolets (31) après le centrage réel et ensuite contracter la broche centrale (15) dans l'état contracté ; et
des moyens pour exposer la pluralité de substrats de disque (L0, L1) à un rayon ultraviolet provenant de la lampe à rayons ultraviolets (31) un temps prédéterminé après la contraction de la broche centrale (15), de manière à durcir l'agent adhésif (11).

14. Dispositif de fabrication de support d'enregistrement selon la revendication 13, **caractérisé en ce que** les moyens pour étendre la broche de centrage (15) délivrent un gaz ou un liquide dans la broche centrale (15) lors de l'extension de la broche centrale (15) dans l'état étendu.

15. Dispositif de fabrication de support d'enregistrement selon la revendication 14, dans lequel les moyens pour étendre la broche centrale (15) délivrent le gaz ou le liquide à la broche centrale (15) à une pression de 2 kg/cm² à 4,5 kg/cm² de sorte que la broche centrale (15) soit suffisamment étendue pour obtenir un effet de centrage.

16. Dispositif de fabrication de support d'enregistrement selon la revendication 13, 14 ou 15, **caractérisé en ce que** la broche centrale (15) a une structure creuse et a une forme à peu près cylindrique, une section transversale prise le long d'un plan perpendiculaire à une direction axiale de celle-ci étant un cercle vrai dans l'état contracté et restant un cercle vrai plus grand dans l'état étendu, la broche centrale (15) a un diamètre qui est plus grand d'au moins 0,2 mm dans l'état étendu qu'un diamètre d'un plus grand des trous centraux (13, 14) dans la pluralité de substrats de disque (L0, L1) devant être centrés ; et la broche centrale (15) dans l'état étendu pousse les parties périphériques internes de la pluralité de substrats de disque (L0, L1) au niveau des trous centraux (13, 14) vers une direction périphérique extérieure avec une pression uniforme pour la plage angulaire de 360 degrés entière.

17. Dispositif de fabrication de support d'enregistrement selon l'une quelconque des revendications 13 à 16, **caractérisé en ce que** la broche centrale (15) est réalisée en un matériau déformable élastiquement ayant une dureté et une épaisseur appropriées de sorte que la broche centrale (15) soit suffisamment souple et se déforme élastiquement pour se conformer aux parties périphériques intérieures de la pluralité de substrats de disque (L0, L1) au niveau des trous centraux (13, 14) ayant des diamètres mutuellement différents, lorsque la broche centrale (15) dans l'état étendu pousse les parties périphériques intérieures de la pluralité de substrats de disque (L0, L1) au niveau des trous centraux (13, 14) vers une direction périphérique extérieure.

18. Dispositif de fabrication de support d'enregistrement selon l'une quelconque des revendications 13 à 17, **caractérisé en ce que** la broche centrale (15) est insérée dans les trous centraux (13, 14) de la pluralité de substrats de disque (L0, L1) dans l'état contracté de manière à réduire à un minimum un frottement entre la broche centrale (15) et les parties périphériques intérieures de la pluralité de substrats de disque (L0, L1), et les moyens pour étendre la broche centrale (15) appliquent ensuite une pression prédéterminée à la broche centrale (15) pour étendre la broche centrale (15) dans l'état étendu pour le centrage réel.

19. Dispositif de fabrication de support d'enregistrement selon l'une quelconque des revendications 13 à 18, **caractérisé en outre par** :
un élément de support central (10) qui est inséré dans les trous centraux (13, 14) de la pluralité de substrats de disque (L0, L1) qui sont lamifiés et qui doivent être centrés provisoirement, avant le centrage réel, ledit élément de support central (10) ayant un diamètre de broche de support qui est plus petit de 0,015 mm à 0,05 mm qu'un diamètre d'un plus petit des trous centraux (13, 14) de la pluralité de substrats de disque (L0, L1) devant être centrés provisoirement.

20. Dispositif de fabrication de support d'enregistrement selon l'une quelconque des revendications 13 à 19, **caractérisé en ce que** le temps prédéterminé est ajusté dans une plage de 0,5 seconde à 60 secondes.

21. Dispositif de fabrication de support d'enregistrement selon la revendication 13 ou 20, **caractérisé en outre par** :
un couvercle (30) qui empêche le rayon ultraviolet provenant de la lampe à rayons ultraviolets (31) d'atteindre la broche centrale (15) lors de l'exposition de la pluralité de substrats de disque (L0, L1) au rayon ultraviolet.

22. Dispositif de fabrication de support d'enregistrement selon la revendication 13 ou 20, **caractérisé en ce que** les moyens pour déplacer la broche centrale (15) déplacent la broche centrale (15) à une position au-dessous d'une table (32) où le rayon ultraviolet provenant de la lampe à rayons ultraviolets (31) est empêché d'atteindre la broche centrale (15) lors de l'exposition de la pluralité de substrats de disque (L0, L1) au rayon ultraviolet.

23. Dispositif de fabrication de support d'enregistrement selon la revendication 13 ou 20, **caractérisé en outre par** :
un élément de blocage (30) qui se déplace pour empêcher le rayon ultraviolet provenant de la lampe à rayons ultraviolets (31) d'atteindre la broche centrale (15), sans nécessiter que la broche centrale (15) se déplace, lors de l'exposition de la pluralité de substrats de disque (L0, L1) au rayon ultraviolet.

24. Dispositif de fabrication de support d'enregistrement selon l'une quelconque des revendications 13 à 23, **caractérisé en ce que** la broche centrale (15) est réalisée en un matériau déformable élastiquement ayant une résistance au rayon ultraviolet, une résistance aux solvants, et une surface lisse autolubrifiante de sorte qu'une colle adhère difficilement à celle-ci.

25. Procédé selon l'une quelconque des revendications 1 à 12, dans lequel le support d'enregistrement est un support d'enregistrement optique ou un support d'enregistrement magnétique.
